# EUROPEAN PATENT SPECIFICATION

(11) **EP 2 652 060 B1**
(45) Date of publication and mention of the grant of the patent: **22.02.2017**
(21) Application number: 11802229.2
(22) Date of filing: 06.12.2011
(51) Int. Cl.: C09J 133/00, C09J 133/06

(54) **PRESSURE SENSITIVE ADHESIVES FOR LOW SURFACE ENERGY SUBSTRATES**
DRUCKEMPFINDLICHE KLEBSTOFFE FÜR NIEDRIGENERGIESUBSTRATE
ADHESIFS SENSIBLES A LA PRESSION POUR DES SURFACES A FAIBLE TENSION

(30) Priority: 13.12.2010 US 422305 P
(43) Date of publication of application: 23.10.2013
(73) Proprietor: 3M Innovative Properties Company, St. Paul, MN 55133-3427 (US)
(72) Inventor: TRASER, Steffen,, 41453 Neuss (DE); FORSTER, Jan D.,, 41453 Neuss (DE)
(74) Representative: Herzog, Fiesser & Partner Patentanwälte PartG mbB
(86) International application number: PCT/US2011/063364
(87) International publication number: WO 2012/082448

(56) References cited:
- US-A1- 2009 093 584

## Description

### TECHNICAL FIELD

This disclosure relates to acrylate-based pressure sensitive adhesives and their application to substrates having a low surface energy.

### BACKGROUND

Acrylate pressure sensitive adhesives are well-known in the art. Ulrich (U.S. Pat. No. RE 24,906) describes alkyl acrylate copolymers, which comprise a major amount of C4 to C14 alkyl esters of acrylic acid monomers and a minor portion of a copolymerizable polar monomer such as acrylic acid. Such adhesives are widely popular due to their availability, their low cost, and their ability to provide the requisite fourfold balance of adhesion, cohesion, stretchiness, and elasticity known to be required for effective pressure sensitive adhesives.

In some industries, such as automotive, display and graphics or aerospace, manufacturers have started to use low surface energy materials. Advances in polyolefin chemistries are leading to materials that are easy to process, easy to color, possess good stiffness and most importantly are low cost. This combination of good mechanical performance at a cost of about half that of typical engineering thermoplastics is enabling polyolefins to advance rapidly in the globally competitive and cost conscience marketplace. While the market is moving towards different, lower cost materials the need to assemble and bond these materials still remains. The substrates needing to be bonded are changing from traditional materials like metal, paint and wood to plastics such as polypropylene or polyethylene.

For example, traffic signs have traditionally been made from aluminum, a substrate that has a high surface energy. Recently, low surface energy substrates like powder coated or painted surfaces, or polyethylene have been used to make traffic signs. The acrylate-based adhesives designed for use on aluminum substrates have not shown adequate performance on low surface energy substrates, e.g., the adhesive is easy to remove. Rubber-based adhesives have shown good performance on low surface energy substrates, but have poor aging and cold temperature performance. In the automotive industry, interior car parts are moving to plastics. Further, exterior car parts made from polyolefins, such as side-body moldings, have to bond to new, scratch resistant, and difficult to bond, clear coats.

### SUMMARY

There is a desire to have an acrylate-based adhesive that is able to adhere to low surface energy substrates while offering good physical properties (such as stability, good low and high temperature shear performance, etc.), and processing benefits (such as reduced processing steps, less expensive, more environmentally-friendly, etc.).

In one aspect, a UV-radiation curable pressure sensitive adhesive is described comprising:
a polymerization reaction product of:
   (a) 0.5 to 25 wt % of a hydroxyl-containing (meth)acryate monomer of formula (I): 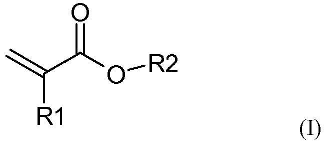 wherein R1 is CH₃ or H; and R2 is (i) a hydrocarbon moiety comprising at least 3 carbon atoms and a hydroxide group, or (ii) a hydrocarbon moiety comprising at least 4 carbon atoms, a catenary heteroatom, and a hydroxide group;
   (b) 0 to 3 wt % of polar crosslinkable monomer;
   (c) 40 to 99.5 wt % of a C₄ to C₂₀ (meth)acrylate ester monomer;
   (d) 5 to 30 parts of a hydrogenated hydrocarbon tackifier per 100 parts the weight sum of all monomers; and
   (e) 0.01 to 3 parts (solid/solid) of a cross-linking agent per 100 parts the weight sum of all monomers, and wherein the polymerization reaction product is substantially free of solvent.

In one embodiment, the pressure sensitive adhesive has a peel value greater than 3.0 N/12.7 mm when tested according to FINAT test method No. 2 on polyethylene; and further wherein the cured adhesive has a shear value greater than 5000 minutes when tested according to FINAT test method No. 8 at 70°C on steel.

In another aspect, a method of making an article is described comprising:
(a) polymerizing (i) 0.5 to 25 wt % of a (meth)acryate monomer of formula (I): 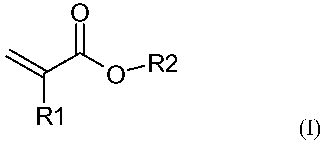 wherein R1 is CH₃ or H; and R2 is (1) a hydrocarbon moiety comprising at least 3 carbon atoms and a hydroxide group, or (2) a hydrocarbon moiety comprising at least 4 carbon atoms, a catenary heteroatom, and a hydroxide group; (ii) 0 to 3 wt % of polar crosslinkable monomer; and (iii) 40 to 99.5 wt % of a C₄ to C₂₀ (meth)acrylate ester monomer; (iv) 5 to 30 % parts of a hydrogenated hydrocarbon tackifier per 100 parts the weight sum of all monomers; and (v) 0.01 to 3 parts (solid/solid) of a cross-linking agent per 100 parts the weight sum of all monomers, to form a curable adhesive composition wherein the polymerization is substantially free of solvent;
(b) curing the curable adhesive composition; and
(c) contacting the cured adhesive composition between a substrate having a surface tension less than 50 mN/m and a carrier film.

In one embodiment, the substrate is selected from: polypropylene, polyethylene, polystyrene, polyvinyl chloride, polyvinyl acetate, polyester, poly(meth)acrylates, a acrylonitrile butadiene styrene, a polyamide, a polycarbonate, a paint, a clearcoat, or combinations thereof.

In one embodiment, the (meth)acryate monomer of formula (I) is selected from:
CH₂=CZC(O)O-(CH₂)ₙOH where n is 3 to 20;
CH₂=CZC(O)O-(CH₂O)ₙH where n is 2 to 13;
CH₂=CZC(O)O-[RO]ₙH where n is 1 to 13 and R linear or branched comprising 1 to 20 carbon atoms;
CH₂=CZC(O)O-[CHCH₃CH₂O]ₙH where n is 1 to 13;
CH₂=CZC(O)O-(CH₂)₂-O-(CH₂)₂OH;
CH₂₌CZC(O)O-CH(OH)-(CH₂)-O-C₆H₅;
CH₂=CZC(O)O-CH₂CH(CH₂CH₃)-CH(CH₂CH₃)-CH(OH)-CH₂CH₃;
CH₂=CZC(O)O-CH(CH₂OH)[CH₂-O-C(O)-C(CH₃)(R3)(R4)] where R3 and R4 are independently selected from alkyl groups and wherein R3+R4 totals 6 to 10 carbon atoms;
CH₂=CZC(O)O-CH₂CH(OH)-[CH₂-O-C(O)-C(CH₃)(R3)(R4)] where R3 and R4 are independently selected from alkyl groups and wherein R3+R4 totals 6 to 10 carbon atoms;
CH₂=CZC(O)O-CH(OH)-CH₂-O- C₆H₄-C(CH₃)₃; and
CH₂=CZC(O)O-CH(OH)-CH₂-O- (CH₂)_{q}(CH₃) where q is 11 to 13; where Z is H or CH₃.

In one aspect, a composition is described comprising: (i) 40 to 99.5 wt % of a C₄ to C₂₀ (meth)acrylate ester monomer; (ii) 0 to 3 wt % of acrylic acid, and (iii) 0.1 to 15 wt % of 2-hydroxy-3-phenoxypropyl acrylate; (iv) 5 - 30 parts of a C9 hydrogenated hydrocarbon per 100 parts the weight sum of all monomers; and (v) 0.01 to 3 parts of 1,6 hexanediol diacrylate per 100 parts the weight sum of all monomers.

In another aspect, a composition is described comprising: (i) 40 to 99.5 wt % of a C₄ to C₂₀ (meth)acrylate ester monomer; (ii) 0 to 3 wt % of acrylic acid, and (iii) 0.1 to 15 wt % of 4-hydroxybutyl acrylate; (iv) 5 - 30 parts of a C9 hydrogenated hydrocarbon per 100 parts the weight sum of all monomers; and (v) 0.01 to 3 parts of 1,6 hexanediol diacrylate per 100 parts the weight sum of all monomers.

In yet another aspect, a composition is described comprising: (i) 40 to 99.5 wt % of a C₄ to C₂₀ (meth)acrylate ester monomer; (ii) 0 to 3 wt % of acrylic acid, and (iii) 0.1 to 15 wt % of a compound according to CH₂=CHC(O)O-CH(CH₂OH)[CH₂-O-C(O)-C(CH₃)(R3)(R4)] where R3 and R4 are independently selected from alkyl groups and wherein R3+R4 totals 7 carbon atoms; (iv) 5 - 30 parts of a C9 hydrogenated hydrocarbon per 100 parts the weight sum of all monomers; and (v) 0.01 to 3 parts of 1,6 hexanediol diacrylate per 100 parts the weight sum of all monomers.

The above summary is not intended to describe each embodiment. The details of one or more embodiments of the invention are also set forth in the description below. Other features, objects, and advantages will be apparent from the description and from the claims.

### DETAILED DESCRIPTION

As used herein, the term
"a", "an", and "the" are used interchangeably and mean one or more; and
"and/or" is used to indicate one or both stated cases may occur, for example A and/or B includes, (A and B) and (A or B);
"cross-linking" refers to connecting two pre-formed polymer chains using chemical bonds or chemical groups in order to increase the modulus of the material;
"interpolymerized" refers to monomers that are polymerized together to form a polymer backbone; and
"(meth)acrylate" refers to compounds containing either an acrylate (CH₂=CHCOOR) or a methacrylate (CH₂=CCH₃COOR) structure or combinations thereof.

Also herein, recitation of ranges by endpoints includes all numbers subsumed within that range (e.g., 1 to 10 includes 1, 2 ,3 ,4 ,5, 6, 7, 8, 9, and 10).

Also herein, recitation of "at least one" includes all numbers of one and greater (e.g., at least 2, at least 4, at least 6, at least 8, at least 10, at least 25, at least 50, at least 100, etc.).

The characteristics of pressure sensitive adhesives are determined by interfacial and rheological properties. It is known that the rheology of a pressure sensitive adhesive can be varied by altering the glass transition temperature (Tg). Polyacrylate pressure sensitive adhesives are generally copolymers of a low glass transition temperature comonomer (historically: isooctyl acrylate, 2-ethyl hexyl acrylate, or butyl acrylate) and a high glass transition temperature comonomer (historically: acrylic acid). The Tg can be varied by adjusting the ratio of the low and the high Tg comonomer. These pressure sensitive adhesives (which have an acrylic acid amount in the range of 5-15 wt%) will lead to excellent peel and shear-properties on high energy surfaces like stainless steel. However, on low surface energy surfaces, these pressure sensitive adhesives perform inadequately.

Traditionally, pressure sensitive adhesives for low energy surfaces have comprised non-polar acrylates to maintain the rheological properties. These pressure sensitive adhesives typically comprise low amounts of acrylic acid and instead use a high Tg, low polarity, comonomer such as isobornyl acrylate. The low polarity and preserved rheological properties of these pressure sensitive adhesives have traditionally led to better adhesion and shear on low energy surfaces than formulations not comprising the high Tg comonomer. Besides the non-polar comonomer and a lower acrylic acid content, a tackifier is incorporated in the polymer matrix to reach high adhesion peel forces on difficult to adhere substrates such as low energy surfaces. However, the addition of tackifiers typically cause the internal strength of the adhesive, especially at elevated temperatures, to decrease.

In selecting a pressure sensitive adhesive for low surface energy surfaces, it is desirable to have a composition with sufficient adhesion (as measured by the peel test) to stick to the low surface energy surface, while having sufficient cohesive strength (i.e., internal strength of the adhesive) (as measured by the shear test). Thus, the adhesive and cohesive properties of the pressure sensitive adhesive must be balanced. The pressure sensitive adhesive of the present disclosure meets the tougher requirements of low surface energy bonding by selecting particular combinations of monomers, cross-linking agent, and tackifier.

In the present disclosure, it has been discovered that pressure sensitive adhesives comprising a functional hydroxyl group provide good adhesion and cohesion to low energy surfaces. Although not wanting to be limited by theory, it is believed that the hydroxyl functional group builds a strong internal physical network, which leads to high cohesive strength. Thus, it is possible to reduce the amount of acrylic acid and the amount of crosslinker added to the formulation without a substantial loss in the shear performance. This reduction of the acrylic acid and crosslinker amount may also lead to high peel values, which more than compensates for the decrease in peel performance as a result of adding the hydroxyl-containing (meth)acryate monomer. Additionally, the use of a hydroxyl-containing comonomer in the pressure sensitive adhesive composition enables higher amounts of tackifier to be added without a significant loss of internal strength.

The pressure sensitive adhesives of the present disclosure are prepared from starting materials comprising a hydroxyl-containing (meth)acryate monomer, a (meth)acrylate ester monomer, a polar monomer, a tackifier, and a cross-linking agent.

In the present disclosure, a hydroxyl-containing (meth)acryate monomer polymerized into the polymer network of the adhesive, is used to increase the internal strength thought to be due to the ability of the hydroxide groups to hydrogen bond with carboxyl and hydroxyl groups within the same or different polymer chains. In the present disclosure, a hydroxyl-containing (meth)acryate monomer of formula (I) is used 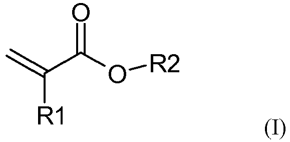 wherein R1 is CH₃ or H; and R2 is (i) a hydrocarbon moiety comprising at least 3 carbon atoms and a hydroxide group, or (ii) a hydrocarbon moiety comprising at least 4 carbon atoms, a catenary heteroatom (such as O, N, and/or S), and a hydroxide group.

In one embodiment, R2 in Formula I is a linear or branched saturated hydrocarbon comprising at least 2, 3, 4, 6, or even 8 carbon atoms and no more than 10, 12, 13, 15, 20, or even 25 carbon atoms. Examples include -(CH₂)ₙCH(CH₃)(CH₂)ₘOH wherein n, and m are independently at least 1, 2, 4, 6, or even 8; no more than 10, 12, 14, 16, or even 20.

In one embodiment, R2 in Formula I is a linear or branched saturated hydrocarbon comprising at least 1 ether linkage and at least 2, 3, 4, 6, or even 8 carbon atoms and no more than 10, 12, 13, 15, 20 or even 25 carbon atoms. Examples include: -(CH₂O)ₙH, -[CH₂CHCH₃O]ₙH,-[CHCH₃CH₂O]ₙH, -(CH₂)ₙ-O-(CH₂)ₘOH, -(CH₂)ₙCH(CH₃)-O-(CH₂)ₘ-O-CH(CH₃)(CH₂)ₚOH,-(CH₂)ₙC(OH) (CH₂)-O-(CH₂)ₘCH(CH₂CH₃)(CH₂)ₚH wherein n, m and p are independently at least 1, 2, 4, 6, or even 8; no more than 10, 12, 14, 16, or even 20.

In one embodiment, R2 in Formula I is a linear or branched saturated hydrocarbon comprising at least 1 ester group and at least 3, 4, 6, or even 8 carbon atoms and no more than 10, 12, 13, 15, 20, 25, 30, or even 35 carbon atoms. Examples include: -(CH₂),CH(OH)(CH₂)ₘ-O-C(O)-C(CH₃)R3R4 wherein n, m and p are independently at least 1, 2, 4, 6, or even 8; no more than 10, 12, 14, 16, or even 20 and R3 and R4 are independently selected from a hydrocarbon group wherein the number of carbon atoms in R3 and R4 is at least 1, 2, 4, 6, or even 7; no more than 8, 10, 12, 14, 16, or even 20

Exemplary hydroxyl-containing (meth)acryate monomer of formula (I) include:
(a) CH₂=CHC(O)O-[RO]ₙH where n is 1 to 13 and R linear or branched comprising 1 to 20 carbon atoms, for example CH₂=CHC(O)O-(CH₂O)ₙH where n is 2 to 13, CH₂=CHC(O)O-(CH₂)₄OH, or CH₂=CHC(O)O-(R)ₙ-(R')ₘ OH where n+m is 1 to 20, R is a branched alkylene group comprising 3 to 6 carbon-atoms and R' is a linear or branched alkylene group comprising 2 to 6 carbon atoms, such as CH₂=CHC(O)O-CHCH₃CH₂OH;
(b) CH₂=CHC(O)O-[RO]ₙ-[R'O]ₘH where R and R' are different alkylene groups which may be linear or branched comprising 1 to 6 carbon atoms, n and m are independently selected from 0 to 13 and n+m is 2 to 13, for example CH₂=CHC(O)O-[CH₂CHCH₃O]ₙH where n is 1 to 13, CH₂=CHC(O)O-[CHCH₃CH₂O]ₙH where n is 1 to 13, and CH₂=CHC(O)O-(CH₂)₂-O-(CH₂)₂OH;
(c) CH₂=CHC(O)O-R"-R where R" is a linear or branched alkylene group comprising a hydroxide and 1 to 20 carbon atoms and R is a linear or branched alkyl group comprising 1 to 20 carbon atoms which optionally may comprise a caternary heteroatom, for example CH₂=CHC(O)O-CH(OH)-(CH₂)-O-C₆H₅, CH₂=CHC(O)O-CH₂-CH(OH)-CH₂-O-C₆H₄X where X is a halogen or an alkyl group optionally comprising at least halogen, or CH₂=CHC(O)O-CH₂CH(CH₂CH₃)- CH₂-CH(CH₂CH₃)-CH(OH)- (CH₂)₂CH3;
(d) CH₂=CHC(O)O-CH(CH₂OH)[CH₂-O-C(O)-C(CH₃)(R3)(R4)] where R3 and R4 are independently selected from alkyl groups and wherein R3+R4 totals 4, 6, 7, 8, or even 10 carbon atoms;
(e) CH₂=CHC(O)O-CH₂CH(OH)-[CH₂-O-C(O)-C(CH₃)(R3)(R4)] where R3 and R4 are independently selected from alkyl groups and wherein R3+R4 totals 4, 6, 7, 8, or even 10 carbon atoms;
(f) CH₂=CHC(O)O- CH₂-CH(OH)-CH₂-O- C₆H₄-C(CH₃)₃;
(g) CH₂=CHC(O)O- CH₂-CH(OH)-CH₂-O- (CH₂)_{q}(CH₃) where q is 11 to 13; (h) CH₂=CHC(O)O-CH₂-CH(OH)-CH₂-O-CH₂-(CH₂CH₃)-(CH₂)₃-CH₃; and
(i) CH₂=CHC(O)O-CH₂-CH(OH)-CH₂-O-C(O)-C(CH₃)(R3)(R4) where R3+R4 is 2 to 12 for example CH₂=CHC(O)O-CH2-[CHCH₂OCH(CH₂OH)CH₂O] (cyclic).

All of the examples above are written as the acrylate monomer, however, the methacrylate monomer is also contemplated for each example (i.e., CH₂=CCH₃C(O)O-[RO]ₙH where n is 1 to 13 and R linear or branched comprising 1 to 20 carbon atoms is contemplated).

Exemplary hydroxyl-containing (meth)acryate monomer of formula (I) include: a reaction product of acrylic acid and a glycidyl ester of versatic acid commercially available under the trade designation "ACE HYDROXYLACRYLATE MONOMER" from Hexion Specialty Chemicals, Belgium; 4-hydroxybutyl acrylate commercially available from BASF AG, Germany; 2-hydroxy-3-phenoxypropyl acrylate ; from Shin Nakamura, Japan; and combinations thereof.

The pressure sensitive adhesive of the present disclosure are acrylate-based and comprise at least 40% by weight (relative to the other monomers) of a polymerized (meth)acrylate ester monomer.

Useful (meth)acrylic esters include at least one monomer selected from the group consisting of a monofunctional (meth)acrylate ester of a linear or branched non-tertiary alkyl alcohol, the alkyl group of which comprises at least 4, 5, 6, 7, 8 or even 10 carbon atoms; and at most 14, 16, 18 or even 20 carbon atoms. In one embodiment, the (meth)acrylate ester monomer is C₄ to C₂₀.

Exemplary (meth)acrylate ester monomers include, butyl (meth)acrylate, 2-ethylhexyl acrylate, n-octyl acrylate, isooctyl acrylate, (meth)decyl acrylate, (meth)dodecyl acrylate, and combinations thereof.

A polar crosslinkable monomer may be used to increase the cohesive strength of the pressure sensitive adhesive. As used herein, the term "polar crosslinkable monomer" is a monomer whose homopolymer has a solubility of greater than 11.0 when measured according to the Fedors technique, as described by Fedors in Polym. Eng. and Sci., v. 14, p. 147 (1974). Examples of suitable polar crosslinkable monomers include (meth)acrylic acid, itaconic acid, fumaric acid, crotonic acid, citraconic acid, and maleic acid, β-carboxyethylacrylate and certain substituted acrylamides, such as N,N-dialkylaminoalkyl (meth)acrylates, N-vinyl-2-pyrrolidone, N-vinyl caprolactam, acrylonitrile, and combinations thereof.

Additional monomers may be added to the composition to alter the performance of the pressure sensitive adhesive

For example, a non-polar monomer may be added to improve the shear performance of the pressure sensitive adhesive. This non-polar monomer also assists in solvating the hydrogenated hydrocarbon tackifier and minimizing the phase separation of the tackifier. The non-polar monomer may be a non-polar ethylenically unsaturated monomer selected from monomers whose homopolymer has a solubility parameter as measured by the Fedors technique of not greater than 11.0 and other than the C₄ to C₂₀ (meth)acylic ester. Examples of suitable non-polar comonomers include 3,3,5-trimethylcyclohexyl acrylate, cyclohexyl acrylate, isobornyl acrylate, n-octyl acrylamide, t-butyl acrylate, methyl methacrylate, ethyl methacrylate, and combinations thereof.

Additional monomers include:, copolymerizable aromatic ketone monomers , such as acryloyl benzophenone, phenoxyethyl acrylate, monoethylenically unsaturated mono-, di- and trialkoxy silane compounds, such as methacryloxypropyltrimethoxysilane, vinyldimethylethoxysilane, vinylmethyldiethoxysilane, vinyltriethoxysilane, vinyltrimethoxysilane, and vinyltriphenoxysilane and combinations thereof.

In the present disclosure suitable tackifiers include hydrogenated hydrocarbon tackifiers. Of particular interest are partially hydrogenated hydrocarbon tackifiers. Hydrogenated hydrocarbon tackifiers are traditionally used in more rubber-based adhesives rather than acrylic-based pressure sensitive adhesives. The hydrogenated hydrocarbon tackifiers are found to be particularly useful in the acrylate-based pressure sensitive adhesives for low surface energy substrates disclosed herein. Exemplary hydrogenated hydrocarbon tackifiers include C₉ hydrogenated hydrocarbon tackifiers. Examples of C₉ hydrogenated hydrocarbon tackifiers include those sold under the trade designation: "REGALITE S-5100", "REGALITE R-7100", "REGALITE R-9100", "REGALITE R-1125", "REGALITE S-7125", "REGALITE S-1100", "REGALITE R-1090", "REGALREZ 6108", "REGALREZ 1085", "REGALREZ 1094", "REGALREZ 1126", "REGALREZ 1139", and "REGALREZ 3103", sold by Eastman Chemical Co., Middelburg, Netherlands; "ARKON P-140", "ARKON P-125", "ARKON P-115", "ARKON P-100", "ARKON P-90", "ARKON M-135", "ARKON M-115", "ARKON M-100", and "ARKON M-90" sold by Arakawa Chemical Inc., Chicago, IL.

In one embodiment, the pressure sensitive adhesive comprises only hydrogenated hydrocarbon tackifiers.

A cross-linking agent is used to create a three-dimensional polymer network and to achieve high internal strength of the pressure sensitive adhesive.

Low cross-linking agent concentrations are needed to achieve a suitable adhesion on a low surface energy surface, however compositions with low level of cross-linking agent typically suffer from shear problems. With the combination of monomers and hydrogenated hydrocarbon tackifier, a stable system of high internal strength is achieved relative to the cross-linking agent concentrations.

Useful cross-linking agents include thermal cross-linking agents. Further useful cross-linking agents include photosensitive crosslinking agents, which are activated by ultraviolet (UV) light. Useful cross-linking agents include: multifunctional acrylated, triazines, and combinations thereof. Exemplary crosslinking agents include substituted triazines such as 2,4,-bis(trichloromethyl)-6-(4-methoxy phenyl)-s-triazine, 2,4-bis(trichloromethyl)-6-(3,4-dimethoxyphenyl)-s-triazine, and the chromophore-substituted halo-s-triazines disclosed in U.S. Pat. Nos. 4,329,384 and 4,330,590 (Vesley). Other useful crosslinking agents include multifunctional alkyl acrylate monomers such as trimetholpropane triacrylate, pentaerythritol tetra-acrylate, 1,2 ethylene glycol diacrylate, 1,4 butanediol diacrylate, 1,6 hexanediol diacrylate, and 1,12 dodecanol diacrylate. Various other crosslinking agents with different molecular weights between (meth)acrylate functionality may also be useful.

Described below is more detail on the preparation of the pressure sensitive adhesives according to the present disclosure.

In the present disclosure, the hydroxyl-containing (meth)acryate monomer of formula (I), a C₄ to C₂₀ (methy)acrylic ester, and a polar crosslinkable monomer, are polymerized to form a copolymer. The polymerization of the monomers is "substantially solvent free". As used herein, "substantially solvent free" means that less than 5%, 2%, 1% or even 0.5% by weight of the monomers, and more preferably no additional solvent is added during the polymerization. The term "solvent" refers both to water and to conventional organic solvents used in the industry which are volatilized in the process.

A hydroxyl-containing (meth)acryate monomer of formula (I), a C₄ to C₂₀ (methy)acrylic ester, and a polar crosslinkable monomer, are polymerized to form a copolymer. As used herein a copolymer is a polymer comprising at least two different interpolymerized monomers (i.e., monomers not having the same chemical structure) and includes terpolymers (comprising three different monomers), tetrapolymers (comprising four different monomers), etc.

The copolymers of the disclosure comprise at least 40, 45, 50, 55, 60, 65, 70, or even 75 % by weight; at most 80, 85, 90, 95, 97, or even 99.5 % by weight of a C₄ to C₂₀ (meth)acrylate ester monomer relative to the other monomers. A higher amount of the C₄ to C₂₀ (meth)acrylate ester monomer relative to the other comonomers affords the pressure sensitive adhesive higher tack at low temperatures.

The copolymers of the disclosure comprise at least 0.5, 1.0, 2.5, 5, 8, or even 10 % by weight; at most 15, 18, 20, or even 25 % by weight of a hydroxyl-containing (meth)acryate monomer of formula (I) relative to the other monomers.

The copolymers of the disclosure comprise at least 0, 0.5, 1.0, 1.5, or even 1.75 % by weight; at most 2.0, 2.5, 2.75, or even 3.0 % by weight of a polar crosslinkable monomer relative to the other monomers.

The tackifier must be miscible with the copolymer. Hydrogenated hydrocarbon based tackifiers are of low polarity and ordinarily are not very miscible with conventional polar monomer containing adhesives. However, a low acrylic acid content and a co-monomer may be incorporated to the adhesive to solvate the tackifier. The particular amount of tackifier depends on the composition of the acrylate-containing polymer and is generally selected to maximize the peel strength without compromising the shear strength.

The hydrogenated hydrocarbon tackifier may not be added or added at a level of at least 5, 8, 10, or even 12 parts; and at most 15, 20, 25, or even 30 parts per 100 parts versus the weight of all of the monomers used.

Optionally, further tackifiers may be used in combination with the hydrogenated hydrocarbon tackifier. Exemplary additional tackifiers include: C5-resins, terpene phenol resins, (poly)terpenes and rosin esters and non-hydrogenated hydrocarbon resins. When used, the additional tackifiers will be added in amounts not exceeding 30%, 25% or even 20% by weight of the total amount of tackifer.

The cross-linking agent may be added at a level of at least 0.01, 0.1, 0.5, 1.0, 1.5, or even 1.75 part solid; at most 2.0, 2.5, 2.75, or even 3.0 part solid per 100 parts solid versus the weight of all of the monomers used.

Further additives may be added to the composition. Useful additives include plasticizers. Exemplary plasticizers include hydrocarbon oils (e.g., those that are aromatic, paraffinic, or naphtalenic) phthalates (e.g., terephthalate), phosphate esters, dibasic acid esters, fatty acid esters, polyethers (e.g., alkyl phenyl ether), epoxy resins, sebacate, adipate, citrate, trimellitate, dibenzoate, and combinations thereof. Optional plasticizer will typically be added in amounts less than 10 parts by weight versus the weight of all of the monomers used.

Other additives can be included in the polymerizable mixture or added at the time of compounding or coating to change the properties of the pressure sensitive adhesive. Such additives include surface additives (flow additives), rheology additives, light protection additives, nanoparticles, degassing additives, antioxidants, pigments, fillers such as glass or polymeric bubbles or beads (which may be expanded or unexpanded), hydrophobic or hydrophilic silica, calcium carbonate, glass or synthetic fibers, toughening agents, reinforcing agents, fire retardants, antioxidants, and stabilizers. The additives are added in amounts sufficient to obtain the desired end properties.

Where a foam-like pressure sensitive adhesive tape is desired, microspheres may be used. Suitable microspheres are commercially available from Kema Nord Plastics under the trade designation "EXPANCEL" and from Matsumoto Yushi Seiyaku under the trade designation "MICROPEARL". When expanded the microspheres have a specific density of approximately 0.02-0.036 g/mL. It is possible to include the unexpanded microspheres in the pressure sensitive adhesive composition and subsequently heat them to cause expansion when they are appropriately processed, but it is generally preferred to mix the expanded microspheres into the adhesive. This process makes it easier to ensure that the hollow microspheres in the final adhesive are substantially surrounded by at least a thin layer of adhesive.

Polymeric microspheres having an average diameter of 10 to 200 micrometers may be blended into the curable composition in amounts from about 15% to about 75% by volume prior to coating. Also useful are glass microspheres having an average diameter of from 5 to 200 micrometers, preferably from about 20 to 80 micrometers. Such microspheres may comprise 5% to 65% by volume of the pressure sensitive adhesive. Both polymeric and glass microspheres are known in the art. The pressure sensitive adhesive layer of the tape should be at least 3 times as thick as the diameter of the microspheres, preferably at least 7 times. If other additives are used, less than 2, 5, 10, 20, 25, 30, 35, or even 40% by weight based on the dry weight of the total adhesive would be suitable.

The copolymers used in the pressure sensitive adhesives of the present disclosure may be polymerized by techniques known in the art, including, for example, the conventional techniques of solventless polymerization.

The monomer mixture can be polymerized by various techniques, with photoinitiated bulk polymerization being preferred. An initiator is preferably added to aid in polymerization of the monomers or pre-polymerized syrup. The type of initiator used depends on the polymerization process. In a preferred embodiment, photoinitiators are used to initiate the polymerization. Photoinitiators that are useful for polymerizing the acrylate monomers include benzoin ethers such as benzoin methyl ether or benzoin isopropyl ether, substituted benzoin ethers such as 2-methyl-2-hydroxypropiophenone, aromatic sulfonyl chlorides such as 2-naphthalenesulfonyl chloride, and photoactive oxides such as 1-phenyl-1,2-propanedione-2-(o-ethoxycarbonyl)oxime. An example of a commercially available photoinitiator is "IRGACURE 651" available from Ciba, having a formula of 2,2-dimethoxy-1,2-diphenylethane-1-one. Generally, the photoinitiator is present in an amount of about 0.005 to 1 weight percent based on the weight of the monomers. In another embodiment, a thermal initiator may be used, such as for example, AIBN (azobisisobutyronitrile) and/or peroxides. The polymerization may be carried out in the presence of at least one free-radical initiator. Useful free-radical UV initiators include, for example, benzophenones.

In a preferred practice of the disclosure, the hydrogenated hydrocarbon tackifier is dissolved in the acrylate monomers or an acrylic syrup. As used herein a syrup refers to a mixture that has been thickened to a coatable viscosity, i.e., preferably between about 300 and 10,000 centipoise or higher depending upon the coating method used, and include mixtures in which the monomers are partially polymerized to form the syrup, and monomeric mixtures which have been thickened with fillers such as silicas and the like.

The compositions of the present disclosure are UV-radiation curable. In one embodiment, the UV-radiation is from a low UV radiation source, such as a UV lamp. Typically, low UV radiation means having an intensity of no more than 20, 10, or even 5 milliWatts/square centimeter (mW/sq cm). In one embodiment, the UV radiation source emits a majority of the emission spectra between about 280 and 400 nanometers (nm).

In one embodiment in additional to using UV radiation, additional cure techniques such as thermal, moisture, or high-energy electromagnetic radiation such as gamma or e-beam radiation may be used.

Preferably, the syrups of the invention are formed by partial polymerization of the monomers by free radical initiators which are known in the art and can be activated by thermal energy or radiation such as ultraviolet light. In some instances, it may be preferred to add additional monomer to the syrup, as well as further photoinitiator and other additives. An effective amount of at least one free radical initiator is added to the acrylate monomers or syrup. The mixture is then coated onto a substrate such as a transparent polyester film, which may optionally be coated with a release coating, and exposed to ultraviolet radiation in a nitrogen rich atmosphere to form a pressure-sensitive adhesive. Alternatively, oxygen can be excluded by overlaying the coated adhesive with a second release coated polyester film. Preferably the ultraviolet radiation is provided by ultraviolet lamps having a majority of their emission spectra between about 280 and 400 nm with a peak at about 350 nm and an intensity less than about 20 mW/sq cm. Subsequent exposure of the adhesive to a second source of energy can be used to cross-link or further cure the adhesive. Such sources of energy include heat, electron beam, gamma radiation, and high intensity ultraviolet lamps, such as mercury are lamps. The adhesive compositions of the invention are particularly suitable for polymerization by ultraviolet radiation because the useful hydrogenated hydrocarbon tackifier does not phase separate after it has been incorporated into the composition, as would be evidenced by haziness or opacity in the adhesive, and it does not impart colors such as yellow which may inhibit (i.e., completely stop) or retard the polymerization process and result in an undesirably high residual monomer/volatile oligomer content.

The adhesives of the invention can also be prepared by bulk polymerization methods in which the adhesive composition comprising the monomers, the hydrogenated hydrocarbon tackifier, and a free radical initiator, is coated onto a flat substrate such as a polymeric film and exposed to an energy source, such as a low UV radiation source, in a low oxygen atmosphere, i.e., less than 1000 parts per million (ppm), and preferably less than 500 ppm, until the polymerization is substantially complete, i.e., residual monomers are less than 10%, and preferably less than 5%.

Alternatively, a sufficiently oxygen free atmosphere can be provided by enclosing the composition with, for example, a polymeric film. In one embodiment, the film can be overlaid on top of the coated adhesive composition before polymerization. In another embodiment, the adhesive composition is placed in pouches, which can be optionally sealed, and then exposed to energy, such as heat or ultraviolet radiation to crosslink the adhesive. The adhesive can then either be dispensed from the pouches for use, or the pouches can be fed to a hot melt coater and coated onto a substrate to make tapes or other types of adhesive coated substrates. In the latter case, the pouch material should be hot melt coatable with the adhesive in the pouch, and the pouch material does not deleteriously affect the desired end properties of the adhesive.

Good low temperature applicability and performance are desirable for the pressure sensitive adhesives useful in the present disclosure. Higher levels of the polar crosslinkable monomer typically adversely affect low temperature performance (e.g., impact and tack) and tackifier miscibility and impair adhesion to low surface energy substrates. In one embodiment, the adhesives of the present disclosure have good cold impact down to at least about -10°C (14 °F), more preferably down to at least about -17°C (0°F). Cold impact performance preferably is evaluated at temperatures of 0°C (32°F) or less, using ASTM D4272 or a similar test.

Aside from the selection of particular combinations of the monomers, tackifier and cross-linking agent, the molecular weight of the polymeric composition is also believed to play a key role in the bonding to low surface energy surfaces. Low molecular weights provide good peel values, but poor cohesion, while high molecular weights provide poor peel values, but good cohesion. Thus, a broader molecular weight distribution may be used to achieve a tacky system (low molecular weight fractions) with a high shear (high molecular weight fractions).

The molecular weight and the molecular weight distribution of the copolymers used in the pressure sensitive adhesive may be key parameters to achieve high adhesion values on low surface energy surfaces as disclosed herein.

The copolymer of the present disclosure has a weight average molecular weight of at least 400,000, 500,000, 750,000, or even 1,000,000,000 grams per mole; at most 2,000,000; 2,250,000; 2,500,000; 2,750,000, or even 3,000,000 grams per mole. The molecular weight of the copolymer can be determined by gel permeation chromatography as is known in the art. The copolymer of the present disclosure typically has a molecular weight dispersity that can be calculated as the weight average molecular weight versus the number average molecular weight of the copolymer. The inherent viscosity is related to the molecular weight of the copolymer, but also includes other factors, such as concentration of the polymer. In the present disclosure, the inherent viscosity of the copolymer may be at least 0.4, 0.45, 0.5, 0.6, 0.7, or even 0.8; at most 0.7, 0.8, 1.0, 1.2, 1.4, 1.6, 1.8 or even 2,3 as measured in ethyl acetate at a concentration of 0.15 grams/deciliter (g/dL).

The molecular weight of the copolymer may be controlled using techniques known in the art. For example, during polymerization, a chain transfer agent may be added to the monomers to control the molecular weight.

Useful chain transfer agents include, for example, those selected from the group consisting of carbon tetrabromide, alcohols, mercaptans, and mixtures thereof. Exemplary chain transfer agents are isooctylthioglycolate and carbon tetrabromide. At least 0.01, 0.05, 0.1, 0.15, 0.2, 0.3, or even 0.4 parts by weight of a chain transfer agent may be used; at most 0.1, 0.2, 0.3, 0.4, 0.5, or even 0.6 parts by weight of a chain transfer agent may be used based upon 100 parts versus the weight of all of the monomers used.

The curable compositions prepared in accordance with the present disclosure are easily coated upon a carrier film by conventional coating techniques to produce adhesive coated sheet materials in accordance with the present disclosure or coated and cured via ultraviolet radiation between two release coated polyester films and laminated on a carrier film. The coating thickness will vary depending upon various factors such as, for example, the particular application or the coating formulation. Coating thicknesses of 10, 20, 25, 30, 40, 50, 60, 75, 100, 125, 150, 200, 250 µm or 300 µm are contemplated.

Generally, the cured adhesive composition is laminated onto a material, (e.g., a carrier film, a liner, or a web), herein referred to as a carrier film. The carrier film may be a flexible or inflexible backing material, or a release liner. The backing material may be any material conventionally utilized as a tape backing.

Suitable materials useful as the carrier film for the adhesive articles of the disclosure include, but are not limited to, polyolefins such as polyethylene, polypropylene (including isotactic polypropylene and high impact polypropylene), polystyrene, polyester, including poly(ethylene terephthalate), polyvinyl chloride, poly(butylene terephthalate), poly(caprolactam), polyvinyl alcohol, polyurethane, poly(vinylidene fluoride), cellulose and cellulose derivates, such as cellulose acetate and cellophane, and wovens and nonwovens. Commercially available carrier film include kraft paper (available from Monadnock Paper, Inc.); spun-bond poly(ethylene) and poly(propylene), such as those available under the trade designations "TYVEK" and "TYPAR" (available from DuPont, Inc.); and porous films obtained from poly(ethylene) and poly(propylene), such as those available under the trade designations "TESLIN" (available from PPG Industries, Inc.), and "CELLGUARD" (available from Hoechst-Celanese). The carrier film delivers the pressure sensitive adhesive of the present disclosure to the desired substrate. The carrier film may be blank or may comprise on the surface opposite the pressure sensitive adhesive, a pigment, indicia, text, design, etc., which is then fixedly attached to the surface of the substrate. In other words, the pressure sensitive adhesive composition is located between and in intimate contact with at least a portion of the substrate having a surface tension less than 50 mN/m and at least a portion of the carrier film.

The substrate of the present disclosure has a low surface energy surface and therefore good wetting of the substrate by the pressure sensitive adhesive is desirable. A low surface energy surface is defined herein as a surface that exhibits low polarity and a critical surface tension less than about 50, 45, 43, 40, or even 30 mN/m. The surface tension may be measured as described by Owens et al. in the Journal of Applied Polymer Science, v. 13 p. 1741-1747 (1969). Exemplary substrates include: low density polyethylene (31 mN/m), polypropylene (28 mN/m), polystyrene (43 mN/m), polyvinyl chloride (39 mN/m), polyvinyl acetate, polyester, poly(meth)acrylates, such as polymethyl methacrylate (39 mN/m), and combinations thereof. Values taken from Owens *et al.* above Houwinck et al., in Adhesion and Adhesives, Elsevier Science, Amsterdam (1965). Other exemplary substrates include paints and clear coats (e.g., automotive clear coats). Examples of commercially available clear coats include: those available from BASF, Germany under the trade designation "UREGLOSS" and PPG Industries, Pittsburgh, PA under the trade designation "CERAMICLEAR5". These paints and clear coats include acrylic resins and polyesters used alone or with mixtures of copolymers comprising hydroxy- or glycidyl-functionalities or carbamatic acid residues (groups); or copolymers of acrylic acid and methacrylic acid esters with hydroxyl groups, free acid groups and further comonomers (e.g., styrene). Other exemplary substrates include acrylonitrile butadiene styrene, polyamides, polycarbonates, and combinations thereof.

The pressure sensitive adhesives according to the present disclosure have particularly good adhesion to substrates having a low surface energy.

In one embodiment, the pressure sensitive adhesive has a peel value greater than 3.0, 3.5, 4.0, 5.0, 6.0, or even 7.0 N/12.7 mm when tested according to FINAT test method No. 2 on a low density polyethylene (smooth side).

In one embodiment, the pressure sensitive adhesive has a peel value greater than 3.0, 4.0, 5.0, or even 10.0 N/12.7 mm when tested according to FINAT test method No. 2 on a polypropylene.

In one embodiment, the pressure sensitive adhesive has a shear value greater than 5000, 7000, 8,000 or even 10000 minutes when tested according to FINAT test method No. 8 at 70°C on steel.

The present disclosure selects particular combinations of monomers, tackifier, and cross-linking agent, which achieve superior performance on low surface energy surfaces. In one embodiment, the pressure sensitive adhesive of the present disclosure provides adequate performance on a variety of low surface energy substrates. For example, the pressure sensitive adhesive may be applied to a polyethylene surface and polypropylene surface and show adequate adhesion to both surfaces. In one embodiment, the pressure sensitive adhesive of the present disclosure has a peel strength of at least 3.0, 3.5, 4.0, 4.5, 5.0, or even 6.0 N/12.7 mm when applied to multiple types of substrates each having a surface tension of less than 50 mN/m.

In one embodiment, the pressure sensitive adhesives of the present disclosure have the ability to adhere to a variety of surfaces under extreme conditions. The articles of the present disclosure can be subjected to harsh weather conditions such as temperature extremes, humidity, atmospheric pollutants, road salt, and infrared, visible, and ultraviolet light. For example, the pressure sensitive adhesives of the present disclosure may show good hot and low temperature shear, good low temperature flow and/or good aging.

In addition the pressure sensitive adhesive may be applied to surfaces with different topographies such as smooth and/or rough surfaces, which make bonding much more complex.

In some applications, organic fluids, such as oil or fuel may contact the substrate and/or the pressure sensitive adhesive and decrease the performance of the pressure sensitive adhesive. In one embodiment, the pressure sensitive adhesive of the present provides resistance to solvent, oil, and benzene/diesel.

The cross-linked tackified acrylic adhesives of the present disclosure surprisingly show good adhesion to a variety of low surface energy substrates and under a variety of complex bonding situations.

In one embodiment, a composition comprises: (i) 40 to 99.5 wt % or even 90 to 99.5 wt % of a C₄ to C₂₀ (meth)acrylate ester monomer; (ii) 0 to 3 wt % or even 0 to 1 wt % of acrylic acid (iii) 0.1 to 15 wt % or even 1 to 10 wt % of 2-hydroxy-3-phenoxypropyl acrylate, (iv) 5 - 30 parts, 10 - 25 parts, or even 15 - 25 parts of a C9 hydrogenated hydrocarbon per 100 parts the weight sum of all monomers; and (v) 0.01 to 3 parts, 0.05 to 1 part of 1,6 hexanediol diacrylate per 100 parts the weight sum of all monomers.

In one embodiment, a composition comprises: (i) 40 to 99.5 wt % or even 90 to 99.5 wt % of a C₄ to C₂₀ (meth)acrylate ester monomer; (ii) 0 to 3 wt % or even 0 to 1 wt % of acrylic acid, and (iii) 0.1 to 15 wt % or even 1 to 10 wt % of 4-hydroxybutyl acrylate , (iv) 5 - 30 parts, 10 - 25 parts, or even 15 - 25 parts of a C9 hydrogenated hydrocarbon per 100 parts the weight sum of all monomers; and (v) 0.01 to 3 parts, 0.05 to 1 part of 1,6 hexanediol diacrylate per 100 parts the weight sum of all monomers..

In one embodiment, a composition comprises: (i) 40 to 99.5 wt % or even 90 to 99.5 wt % of a C₄ to C₂₀ (meth)acrylate ester monomer; (ii) 0 to 3 wt % or even 0 to 1 wt % of acrylic acid, and (iii) 0.1 to 15 wt % or even 1 to 10 wt % of a compound according to CH₂=CHC(O)O-C(CH₂OH)[CH₂-O-C(O)-C(CH₃)(R3)(R4)] where R3 and R4 are independently selected from alkyl groups and wherein R3+R4 totals 7 carbon atoms; (iv) 5 - 30 parts, 10 - 25 parts, or even 15 - 25 parts of a C9 hydrogenated hydrocarbon per 100 parts the weight sum of all monomers; and (v0.01 to 3 parts, 0.05 to 1 part of 1,6 hexanediol diacrylate per 100 parts the weight sum of all monomers.

Some embodiments/items of the present include:
Item 1. A UV-radiation curable pressure sensitive adhesive comprising:
   a polymerization reaction product of:
      (a) 0.5 to 25 wt % of a hydroxyl-containing (meth)acrylate monomer of formula (I): 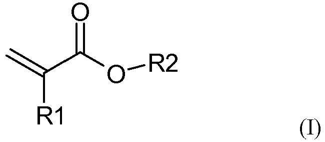 wherein R1 is CH₃ or H; and R2 is (i) a hydrocarbon moiety comprising at least 3 carbon atoms and a hydroxide group, or (ii) the hydrocarbon moiety comprising at least 4 carbon atoms, a catenary heteroatom, and a hydroxide group;
      (b) 0 to 3 wt % of polar crosslinkable monomer;
      (c) 40 to 99.5 wt % of a C₄ to C₂₀ (meth)acrylate ester monomer;
      (d) 5 to 30 parts of a hydrogenated hydrocarbon tackifier per 100 parts the weight sum of all monomers; and
      (e) 0.01 to 3 parts (solid/solid) of a cross-linking agent per 100 parts the weight sum of all monomers; and
   wherein the polymerization reaction product is substantially free of solvent.
Item 2. The pressure sensitive adhesive of item 1, wherein the C₄ to C₂₀ (meth)acrylate ester monomer is selected from at least one of: butyl acrylate, isooctyl acrylate, 2-ethylhexyl acrylate, and combinations thereof.
Item 3. The pressure sensitive adhesive of any one of the previous items wherein the polar crosslinkable monomer is acrylic acid.
Item 4. The pressure sensitive adhesive of any one of the previous items wherein the cross-linking agent is selected from: a triazine, a multifunctional acrylate, and combinations thereof.
Item 5. The pressure sensitive adhesive of any one of the previous items, wherein the hydrogenated hydrocarbon tackifier is a C₉.
Item 6. The pressure sensitive adhesive of any one of the previous items, wherein the polymerized reaction product has a molecular weight of 500,000 to 3,000,000 g/mol.
Item 7. The pressure sensitive adhesive of any one of the previous items, wherein the (meth)acryate monomer of formula (I) is selected from at least one of:
   CH₂=CZC(O)O-(CH₂)ₙOH where n is 3 to 20;
   CH₂=CZC(O)O-(CH₂O)ₙH where n is 2 to 13;
   CH₂=CZC(O)O-[RO]ₙH where n is 1 to 13 and R linear or branched comprising 1 to 20 carbon atoms;
   CH₂=CZC(O)O-[CHCH₃CH₂O]ₙH where n is 1 to 13;
   CH₂=CZC(O)O-(CH₂)₂-O-(CH₂)₂OH;
   C_{H2=}C_{Z}C(O)O-CH(OH)-(CH₂)-O-C₆H₅;
   CH₂=CZC(O)O-CH₂CH(CH₂CH₃)-CH(CH₂CH₃)-CH(OH)-CH₂CH₃;
   CH₂=CZC(O)O-CH(CH₂OH)[CH₂-O-C(O)-C(CH₃)(R3)(R4)] where R3 and R4 are independently selected from alkyl groups and wherein R3+R4 totals 6 to 10 carbon atoms;
   CH₂=CZC(O)O-CH₂CH(OH)-[CH₂-O-C(O)-C(CH₃)(R3)(R4)] where R3 and R4 are independently selected from alkyl groups and wherein R3+R4 totals 6 to 10 carbon atoms;
   CH₂=CZC(O)O-CH(OH)-CH₂-O- C₆H₄-C(CH₃)₃; and
   CH₂=CZC(O)O-CH(OH)-CH₂-O-(CH₂)_{q}(CH₃) where q is 11 to 13; where Z is H or CH₃.
Item 8. The pressure sensitive adhesive of any one of the previous items, wherein the pressure sensitive adhesive has a peel value greater than 3.0 N/12.7 mm (millimeters) (0.5 inches) when tested according to FINAT test method No. 2 on polyethylene (smooth side); and further wherein the cured adhesive has a shear value greater than 5000 minutes when tested according to FINAT test method No. 8 at 70° C on steel.
Item 9. The pressure sensitive adhesive of any one of the previous items, wherein the pressure sensitive adhesive has a peel value greater than 3.0 N/12.7 mm (millimeters) (0.5 inches) when tested according to FINAT test method No. 2 on polypropylene; and further wherein the cured adhesive has a shear value greater than 5000 minutes when tested according to FINAT test method No. 8 at 70° C on steel.
Item 10. The pressure sensitive adhesive of any one of the previous items, further comprising a plasticizer.
Item 11. A method of making an article comprising:
   (a) polymerizing (i) 0.5 to 25 wt % of a (meth)acryate monomer of formula (I): 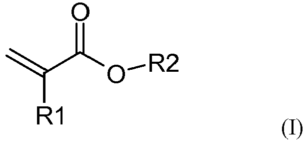 wherein R1 is CH₃ or H; and R2 is (1) a hydrocarbon moiety comprising at least 3 carbon atoms and a hydroxide group, or (2) the hydrocarbon moiety comprising at least 4 carbon atoms, a catenary heteroatom, and a hydroxide group; (ii) 0 to 3 wt % of polar crosslinkable monomer; and (iii) 40 to 99.5 wt % of a C₄ to C₂₀ (meth)acrylate ester monomer; (iv) 5 to 30 % parts of a hydrogenated hydrocarbon tackifier per 100 parts the weight sum of all monomers; and (v) 0.01 to 3 parts (solid/solid) of a cross-linking agent per 100 parts the weight sum of all monomers, to form a curable adhesive composition wherein the polymerization is substantially free of solvent;
   (b) curing the curable adhesive composition; and
   (c) contacting the cured adhesive composition between a substrate having a surface tension less than 50 mN/m and a carrier film.
Item 12. The method of item 11, wherein the curable adhesive is cured via ultraviolet radiation.
Item 13. The method of item 12, wherein the ultraviolet radiation is a low UV radiation source.
Item 14. An article comprising the UV-radiation curable pressure sensitive adhesive of any one of items 1-10 and a substrate having a surface tension less than 50 mN/m.
Item 15. The article according to item 14, wherein the substrate is selected from: polypropylene, polyethylene, polystyrene, polyvinyl chloride, polyvinyl acetate, polyester, poly(meth)acrylates, an acrylonitrile butadiene styrene, a polyamide, a polycarbonate, a paint, a clearcoat, or combinations thereof.
Item 16. The article according to any one of items 14-15, further comprising a carrier film.
Item 17. A composition comprising: (i) 40 to 99.5 wt % of a C₄ to C₂₀ (meth)acrylate ester monomer; (ii) 0 to 3 wt % of acrylic acid, and (iii) 0.5 to 25 wt % of 2-hydroxy-3-phenoxypropyl acrylate; (iv) 5 - 30 parts of a C9 hydrogenated hydrocarbon per 100 parts the weight sum of all monomers; and (v) 0.01 to 3 parts of 1,6 hexanediol diacrylate per 100 parts the weight sum of all monomers.
Item 18. A composition comprising: (i) 40 to 99.5 wt % of a C₄ to C₂₀ (meth)acrylate ester monomer; (ii) 0 to 3 wt % of acrylic acid, and (iii) 0.5 to 25 wt % of 4-hydroxybutyl acrylate; (iv) 5 - 30 parts of a C9 hydrogenated hydrocarbon per 100 parts the weight sum of all monomers; and (v) 0.01 to 3 parts of 1,6 hexanediol diacrylate per 100 parts the weight sum of all monomers.
Item 19. A composition comprising: (i) 40 to 99.5 wt % of a C₄ to C₂₀ (meth)acrylate ester monomer; (ii) 0 to 3 wt % of acrylic acid, and (iii) 0.5 to 25 wt % of a compound according to CH₂=CHC(O)O-CH(CH₂OH)[CH₂-O-C(O)-C(CH₃)(R3)(R4)] where R3 and R4 are independently selected from alkyl groups and wherein R3+R4 totals 7 carbon atoms; (iv) 5 - 30 parts of a C9 hydrogenated hydrocarbon per 100 parts the weight sum of all monomers; and (v) 0.01 to 3 parts of 1,6 hexanediol diacrylate per 100 parts the weight sum of all monomers.

### EXAMPLES

Advantages and embodiments of this disclosure are further illustrated by the following examples, but the particular materials and amounts thereof recited in these examples, as well as other conditions and details, should not be construed to unduly limit this invention. In these examples, all percentages, proportions and ratios are by weight unless otherwise indicated.

All materials are commercially available, for example from Sigma-Aldrich Chemical Company; Germany, or known to those skilled in the art unless otherwise stated or apparent.

These abbreviations are used in the following examples: g = gram, kg = kilograms, min = minutes, cm = centimeter, mm = millimeter, and wt = weight.

### Materials

| Abbreviation/ product name | Name | Available from |
|---|---|---|
| IOA | isooctyl acrylate | Synthesis from isooctylalcohol and acrylic acid |
| IBOA | isobornyl acrylate sold under the trade designation "SR 506D" | Sartomer Co. (Cray Valley, France) |
| AA | acrylic acid | BASF, Germany |
| ACE | monoacrylate based on a reaction product of acrylic acid and CARDURA E10P (glycidyl ester of VERSATIC acid) available under the trade designation "ACE HYDROXYLACRYLATE MONOMER". | Hexion Specialty Chemicals, Belgium |
| NK Ester 702A | 2-hydroxy-3-phenoxypropyl acrylate | Shin Nakamura, Japan |
| 4-HBA | 4-hydroxybutyl acrylate | BASF, Germany |
| Chdol 10 | cyclohexanespiro-2-(1,3-dioxalane-4-yl)acrylate | San Ester Corp. (Osaka Organic Chemicals), Japan |
| CD 420 | isophoryl acrylate | Sartomer Co. (Cray Valley, France) |
| Medol 10 | 2-ethyl-2-methyl-1,3-dioxolan-4-yl)methylacrylate | San Ester Corp. (Osaka Organic Chemicals), Japan |
| Oxe-10 | 3-ethyl-3-oxetanyl-methylacrylate | San Ester Corp. (Osaka Organic Chemicals), Japan |
| TBA | tertiarybutyl acrylate | BASF, Germany |
| TACK-1 | Tackifier 1: Hydrogenated hydrocarbon resin sold under the trade designation "REGALREZ 6108" | Eastman Chemical Co., Middelburg Netherlands |
| TACK-2 | Tackifier 2: Hydrogenated hydrocarbon resin sold under the trade designation "REGALITE R-7100" | Eastman Chemical Co., Middelburg Netherlands |
| TACK-3 | Tackifier 3: Hydrogenated hydrocarbon resin sold under the trade designation "REGALITE R-1090" | Eastman Chemical Co., Middelburg Netherlands |
| TACK-4 | Tackifier 4: Hydrogenated hydrocarbon resin sold under the trade designation "ARKON M-100" | Arakawa Chemicals, Europe |
| TACK-5 | Tackifier 5: Hydrocarbon resin sold under the trade designation "ARKON P-100" | Arakawa Chemicals, Europe |
| TACK-6 | Tackifier 6: Hydrogenated hydrocarbon resin sold under the trade designation "REGALITE S-7125" | Eastman Chemical Co., Middelburg Netherlands |
| TACK-7 | Tackifier 7: Hydrogenated hydrocarbon resin sold under the trade designation "REGALITE P-1125" | Eastman Chemical Co., Middelburg Netherlands |
| TACK-8 | Tackifier 8: Hydrogenated hydrocarbon resin sold under the trade designation "REGALITE R-9100" | Eastman Chemical Co., Middelburg Netherlands |
| C-TACK-1 | Comparative tackifier-1: Hydrocarbon resin sold under the trade designation "ESCOREZ 5600" | Exxon Mobil Chemical, USA |
| C-TACK-2 | Comparative tackifier-2: Synthetic glycerol ester of a highly hydrogenated refined wood rosin sold under the trade designation "FORAL 85E" | Eastman Chemical Co., Europe |
| C-TACK-3 | Comparative tackifier-3: rosin ester from penta alcohol sold under the trade designation "SUPERSTER A-115" | Arakawa Chemicals, Europe |
| C-TACK-4 | Comparative tackifier-4: terpene phenolic resin sold under the trade designation "SYLVAREZ TP95" | Arizona Chemicals, USA |
| C-TACK-5 | Comparative tackifier-5: Synthetic glycerol ester of a highly hydrogenated refined wood rosin sold under the trade designation "FORAL 85" | Eastman Chemical Co., Kingsport US |
| C-TACK-6 | Comparative tackifier-6: Fully hydrogenated C-5 resin sold under the trade designation "EASTOTAC 100R" | Eastman Chemical Co., Middelburg Netherlands |
| Photoinitiator | 2,2-Dimethoxy-2-phenylacetophenone available under the trade designation "OMNIRAD BDK" | iGm resins, Waalwijk Netherlands |
| Thermal initiator | Dimethyl 2,2'-azobis(2-methylpropionate) available under the trade designation "V601" used as a 1% solution in ethylacetate | Wako Co., Neuss, Germany |
| XL-1 | 1,6-hexanediol diacrylate | Sartomer Co. (Cray Valley, France) |
| XL-2 | isophthaloyl-bis-(propylenimine) available under the trade designation "RD1054" | 3M, UK |

### Synthesis of the adhesive: general procedure

Synthesis 1: General procedure: Monomers were added to a vessel containing 0.04 pph of Photoinitiator. The mixture was flushed 10 minutes with nitrogen. The mixture then was exposed to UV radiation to initiate the polymerization, while nitrogen was bubbled through the mixture and the mixture was stirred with a propeller stirrer. The polymerization process was stopped when the viscosity reached a value of approx. 3000 mPas (milli Pascals) by adding air to the system. Additional 0.16 pph (parts per hundred) photoinitiator, cross-linking agent and tackifier (if specified) were added to the syrup and mixed until they had dissolved.

Synthesis 2: General procedure: A glass bottle was charged with the monomers. Ethylacetate and heptane were added to obtain a 45% solids reaction mixture. The ratio of ethylacetate/heptane was selected in function of the desired molecular weight. 0.2% (relative to the weight of the monomers) of Thermal initiator was added. The bottle was degassed with nitrogen at 1.0 liter per minutes (L/min) for 3 min and sealed. The reaction was run during 20 hrs (hours) in a launder-o-meter at 55°C. A conversion of about 98-99% was obtained. The copolymer solution was mixed with a tackifier solution and a cross-linking agent solution as indicated in the respective examples. After homogenization at the roller mill for 1 hr the tackifier solution was added and then the mixture was homogenized for 24 hrs. Then the cross-linking agent was added and the resulting mixture was homogenized for 1 hr.

### Preparation of pressure sensitive adhesive tapes

Cure 1: The syrup was then coated at a thickness of about 100 µm between two siliconized PET-liners at ambient conditions. The syrup was cured under a low UV-radiation light (from about 3.28 to 4.95 mW/cm²).
Cure 2: The adhesive solution was coated on a silicone coated polyester liner and cured for 10 min at room temperature and 3 min at 100 °C. The coating weight was 100 g/m² (gram/meter²). The construction was then laminated on a polyester carrier film.
Cure 3: The syrup was then coated at a thickness of about 100 µm between two siliconized PET-liners at ambient conditions. The syrup was cured under a high UV radiation light (about 497 mW/cm²).

### Substrates:

The adhesives were tested for their adhesive properties on the following substrates:
Sub 1: Polyethylene film 13 mils (330 micrometers) thick prepared in-house from polyethylene pellets available under the trade designation "VORIDIAN POLYETHYLENE 1550P" available from Eastman Chemical Co., Kingsport, TN. was fixed on an aluminium plate (150cm x 50 x 2 mm), and testing was done on the smooth side.
Sub 2: Polypropylene plates available under the trade designation "Kunststoftprüfkörper aus PP natur Fabrikat Simona DWST" (150 x 50 x 2 mm) available from Rocholl GmbH, Aglatershausen, Germany.
Sub 3: Steel

Prior to applying the adhesive, the test panels Sub 1 and Sub 2 were cleaned using a 1:1 mixture of isopropylalcohol:distilled water. The cleaned panels were dried using a tissue. Test panel Sub 3 was first cleaned with MEK then n-heptane and dried with a tissue, followed by cleaning again with n-heptane and then dried using a tissue.

### Test methods:

### Peel test at 90° (FINAT Test Method no.2)

A strip of 12.7 mm wide and more than 175 mm length was cut out in the machine direction from the coated pressure sensitive adhesive sample. The backing was removed from the strip and the strip was placed on a clean test plate, with the adhesive side down, using light finger pressure. The standard FINAT test roller (2 kg) was rolled in each direction at a speed of approximately 10 mm per second to obtain intimate contact between the adhesive mass and the substrate surface. After applying the strip to the test plate, the test plate was left at room temperature for a period of 24 hr before testing. The test plate and strip were fixed into the horizontal support, which was secured into the bottom jaw of the tensile tester. The testing machine (Zwick/Roell Z020, Ulm, Germany) was set at 300 mm (millimeter) per minute jaw separation rate. Test results are expressed in Newton per 12.7 mm. The quoted peel values are the average of three 90°-peel measurements.

### Static shear test @ 70 °C with 500 g (FINAT Test Method no.8)

A strip of 25.4 mm wide and more than 175 mm long was cut in machine direction from the adhesive sample. A loop was prepared at one end of the strip in order to hold the specified weight. The strip was attached to the edge of the panel using the opposite end to the loop. The strip was attached precisely and bubble free so as to obtain a bonded area of 25.4 x 25.4 mm. The standard FINAT test roller (2 kg) was rolled in each direction at a speed of approximately 10 mm per second to obtain intimate contact between the adhesive mass and the substrate surface. After a dwell time of 24 hr, the sample was placed in the shear stand and let dwell 10 minutes at the specified test-temperature of 70 °C. A 500 g load was put in the loop of the sample and the timer started. Test results are expressed in minutes. The quoted static shear values are the average of six shear measurements.

### Examples 1 to 4 and comparative examples CE-1 to CE-6

In examples 1 to 4 and comparative examples CE-1 to CE-6, adhesive formulations were prepared using the monomers (in weight % relative to all the monomers), crosslinker (in parts per 100 wt% of monomers ), and tackifier (in parts per 100 wt% of monomers) as indicated in Table 1. Photoinitiator content was 0.2 parts per 100 wt% of monomers. The adhesive compositions were pre-polymerized, coated and cured according to Synthesis 1 and Cure 1. The adhesives were tested according to 90° Peel Finat no. 2 and Static Shear Finat no. 8 tests. The results are given in table 2.

**Table 1**

| Example | IOA | AA | ACE | 4-HBA | NK Ester 702A | TACK-1 | HDDA |
|---|---|---|---|---|---|---|---|
| CE-1 | 99.5 | 0.5 | / | / | / | / | 0.08 |
| CE-2 | 99.5 | 0.5 | / | / | / | 20 | 0.08 |
| 1 | 99.5 | 0.5 | 5 | / | / | 20 | 0.08 |
| 2 | 95 | 0 | 5 | / | / | 20 | 0.08 |
| 3 | 99.5 | 0.5 | / | / | 5 | 20 | 0.08 |
| 4 | 99.5 | 0.5 | / | 5 | / | 20 | 0.08 |
| CE-3 | 85 | 10 | 5 | / | / | 20 | 0.08 |
| CE-4 | 69.5 | 0.5 | 30 | / | / | 20 | 0.08 |
| CE-5 | 82.5 | 2.5 | 15 | / | / | / | 0.08 |
| CE-6 | 82.5 | 2.5 | / | 15 | / | / | 0.08 |

| | | | | | | | |
|---|---|---|---|---|---|---|---|
| / means not added | | | | | | | |

**Table 2**

| Example | 90° Peel (N/12.7 mm) | | Finat No. 8 Shear (min) [failure] |
|---|---|---|---|
| | Sub 1 | Sub 2 | Sub 3 |
| CE-1 | 2.88 | 6.03 | 57 |
| CE-2 | 5.45* | 6.52* | 64 |
| 1 | 4.95 | 9.75 | 10000+ |
| 2 | 3.71 | 3.41 | 10000+ |
| 3 | 6.29 | 9.33 | 10000+ |
| 4 | 5.42 | 7.2 | 10000+ |
| CE-3 | 0.77 | 0.41 | 10000+ |
| CE-4 | 1.75 | 1.45 | 10000+ |
| CE-5 | 0.90 | 2.01 | 10000+ |
| CE-6 | 1.02 | 1.94 | 10000+ |

| | | | |
|---|---|---|---|
| * had shocky peel | | | |

### Examples 5 to 7 and comparative examples CE-7 to CE-12

In examples 5 to 7 and comparative examples CE-7 to CE-12 different co-monomers were used. The adhesive formulations were prepared using 99.5 wt% IOA, 0.5 wt % AA and 5 wt% of the co-monomer as indicated in Table 3, along with 20 parts TACK-1 per 100 wt% of monomers, 0.08 parts HDDA per 100 wt% of monomers and 0.2 parts of Omnirad BDK per 100 wt% of monomers. The adhesive composition was pre-polymerized, coated and cured according to Synthesis 1 and Cure 1. The adhesives were tested according to 90° Peel Finat no. 2 and Static Shear Finat no. 8 tests. The results are given in table 3.

**Table 3**

| Example | Co-Monomer used | 90° Peel (N/12.7 mm) | | | Finat No. 8 Shear (min) [failure] |
|---|---|---|---|---|---|
| | | Sub 1 | Sub 2 | Sub 3 | Sub 3 |
| 5 | NK Ester 702A | 5.42 | 9.33 | 7.35 | 10000+ |
| 6 | 4-HBA | 6.29 | 7.20 | 7.69 | 10000+ |
| 7 | ACE | 4.42 | 8.62 | 5.33 | 10000+ |
| CE-7 | Chdol 10 | 3.90 | 11.67 | 10.84 | 47 |
| CE-8 | CD 420 | 4.25* | 10.47 | 9.87 | 87 |
| CE-9 | Medol 10 | 5.45* | 10.74 | 9.38 | 136 |
| CE-10 | Oxe-10 | 4.19 | 12.20 | 9.46 | 85 |
| CE-11 | TBA | 4.27* | 10.75 | 9.91 | 64 |
| CE-12 | IBOA | 4.71 | 5.25 | 12.58 | 44 |

| | | | | | |
|---|---|---|---|---|---|
| * had shocky peel | | | | | |

### Examples 8 to 15 and comparative examples CE-13 to CE-19

In examples 8 to 15 and comparative examples CE-13 to CE-19 different tackifiers were used. The adhesive formulations were prepared using 99.5 wt% IOA, 0.5 wt % AA and 5 wt% ACE, along with 20 parts per 100 wt% of monomers of tackifiers as indicated in Table 4, 0.08 parts HDDA per 100 wt% of monomers and 0.2 parts of Omnirad BDK per 100 wt% of monomers. The adhesive composition was pre-polymerized, coated and cured according to Synthesis 1 and Cure 1. The adhesives were tested according to 90° Peel Finat no. 2 and Static Shear Finat no. 8 tests. The results are given in table 4.

**Table 4**

| Example | Tackifier used | 90° Peel (N/12.7 mm) | | Finat No. 8 Shear (min) |
|---|---|---|---|---|
| | | Sub 1 | Sub 2 | Sub 3 |
| 8 | TACK-2 | 10.21 | 8.81 | 10000+ |
| 9 | TACK-3 | 7.37 | 6.54 | 10000+ |
| 10 | TACK-4 | 11.07 | 7.50 | 10000+ |
| 11 | TACK-5 | 7.50 | 6.15 | 10000+ |
| 12 | TACK-6 | 10.43 | 7.67 | 10000+ |
| 13 | TACK-1 | 5.40 | 8.66 | 10000+ |
| 14 | TACK-7 | 7.97 | 6.13 | 10000+ |
| 15 | TACK-8 | 5.05 | 5.83 | 5600 |
| CE-13 | None | 2.10 | 2.90 | 10000+ |
| CE-14 | C-TACK-6 | 7.07 | 6.65 | 402 |
| CE-15 | C-TACK-1 | 9.39 | 7.57 | 11 |
| CE-16 | C-TACK-2 | 6.26 | 7.73 | 135 |
| CE-17 | C-TACK-3 | Not tested* | | 0 |
| CE-18 | C-TACK-4 | Not tested* | | 0 |
| CE-19 | C-TACK-5 | Sample too soft for testing | | |

| | | | | |
|---|---|---|---|---|
| * Sample not tested because of incomplete polymerization and residual monomer present. | | | | |

### Example 16 and comparative examples CE-20 to CE-21

In example 16 and comparative examples CE-20 to CE-21, adhesive formulations were prepared using the monomers (in weight % relative to all the monomers), crosslinker (in parts per 100 wt% of monomers), and tackifier (in parts per 100 wt% of monomers) as indicated in Table 5. Also shown in Table 5 is the synthesis (Synthesis 1 is solvent free UV curing whereas Synthesis 2 is a solvent based thermal polymerization) and cure method used. The adhesives were tested according to 90° Peel Finat no. 2 and Static Shear Finat no. 8 tests. The results are given in table 5.

**Table 5**

| | | Example 16 | CE-20 | CE-21 |
|---|---|---|---|---|
| Synthesis | | 1 | 2 | 1 |
| Cure | | 1 | 2 | 3 |
| IOA | | 94.5 | 94.5 | 94.5 |
| AA | | 0.5 | 0.5 | 0.5 |
| ACE | | 5 | 5 | 5 |
| TACK-1 | | 20 | 20 | 20 |
| XL-1 | | 0.08 | / | 0.08 |
| XL-2 | | / | 0.08 | / |
| 90° Peel (N/12.7 mm) | Sub1 | 4.95 | 4.82 | 1.1 |
| | Sub 2 | 9.75 | 3.23 | 1.15 |
| Finat No. 8 Shear (min) | Sub 3 | 10000+ | 3 | 61 |

| | | | | |
|---|---|---|---|---|
| / means not added | | | | |

Foreseeable modifications and alterations of this invention will be apparent to those skilled in the art without departing from the scope and spirit of this invention. This invention should not be restricted to the embodiments that are set forth in this application for illustrative purposes.

## Claims

1. A UV-radiation curable pressure sensitive adhesive comprising:
(i) a polymerization reaction product of:
(a) 0.5 to 25 wt % of a hydroxyl-containing (meth)acrylate monomer of formula (I): 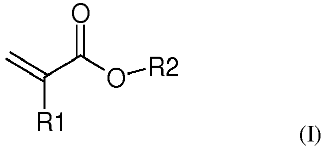 wherein R1 is CH₃ or H; and R2 is (i) a hydrocarbon moiety comprising at least 3 carbon atoms and a hydroxide group, or (ii) the hydrocarbon moiety comprising at least 4 carbon atoms, a catenary heteroatom, and a hydroxide group;
(b) 0 to 3 wt % of polar crosslinkable monomer;
(c) 40 to 99.5 wt % of a C4 to C₂₀ (meth)acrylate ester monomer;
(ii) 5 to 30 parts of a hydrogenated hydrocarbon tackifier per 100 parts the weight sum of all monomers; and
(iii) 0.01 to 3 parts (solid/solid) of a cross-linking agent per 100 parts the weight sum of all monomers; and
wherein the polymerization reaction product is substantially free of solvent.

2. The pressure sensitive adhesive of claim 1, wherein the C₄ to C₂₀ (meth)acrylate ester monomer is selected from at least one of: butyl acrylate, isooctyl acrylate, 2-ethylhexyl acrylate, and combinations thereof.

3. The pressure sensitive adhesive of any one of the previous claims wherein the polar crosslinkable monomer is acrylic acid.

4. The pressure sensitive adhesive of any one of the previous claims wherein the cross-linking agent is selected from: a triazine, a multifunctional acrylate, and combinations thereof.

5. The pressure sensitive adhesive of any one of the previous claims, wherein the hydrogenated hydrocarbon tackifier is a C₉.

6. The pressure sensitive adhesive of any one of the previous claims, wherein the polymerized reaction product has a molecular weight of 500,000 to 3,000,000 g/mol.

7. The pressure sensitive adhesive of any one of the previous claims, wherein the (meth)acryate monomer of formula (I) is selected from at least one of:
CH₂=CZC(O)O-(CH₂)ₙOH where n is 3 to 20;
CH₂=CZC(O)O-(CH₂O)ₙH where n is 2 to 13;
CH₂=CZC(O)O-[RO]ₙH where n is 1 to 13 and R linear or branched comprising 1 to 20 carbon atoms;
CH₂=CZC(O)O-[CHCH₃CH₂O]ₙH where n is 1 to 13;
CH₂=CZC(O)O-(CH₂)₂-O-(CH₂)₂OH;
CH₂=CZC(O)O-CH(OH)-(CH₂)-O-C₆H₅;
CH₂=CZC(O)O-CH₂CH(CH₂CH₃)-CH(CH₂CH₃)-CH(OH)-CH₂CH₃;
CH₂=CZC(O)O-CH(CH₂OH)[CH₂-O-C(O)-C(CH₃)(R3)(R4)] where R3 and R4 are independently selected from alkyl groups and wherein R3+R4 totals 6 to 10 carbon atoms;
CH₂=CZC(O)O-CH₂CH(OH)-[CH₂-O-C(O)-C(CH₃)(R3)(R4)] where R3 and R4 are independently selected from alkyl groups and wherein R3+R4 totals 6 to 10 carbon atoms;
CH₂=CZC(O)O-CH(OH)-CH₂-O- C₆H₄-C(CH₃)₃; and
CH₂=CZC(O)O-CH(OH)-CH₂-O-(CH₂)_{q}(CH₃) where q is 11 to 13; where Z is H or CH₃.

8. The pressure sensitive adhesive of any one of the previous claims, wherein the pressure sensitive adhesive has a peel value greater than 3.0 N/12.7 mm (millimeters) (0.5 inches) when tested according to FINAT test method No. 2 on polyethylene (smooth side); and further wherein the cured adhesive has a shear value greater than 5000 minutes when tested according to FINAT test method No. 8 at 70° C on steel.

9. The pressure sensitive adhesive of any one of the previous claims, wherein the pressure sensitive adhesive has a peel value greater than 3.0 N/12.7 mm (millimeters) (0.5 inches) when tested according to FINAT test method No. 2 on polypropylene; and further wherein the cured adhesive has a shear value greater than 5000 minutes when tested according to FINAT test method No. 8 at 70° C on steel.

10. A method of making an article comprising:
(a) polymerizing (i) 0.5 to 25 wt % of a (meth)acryate monomer of formula (I): 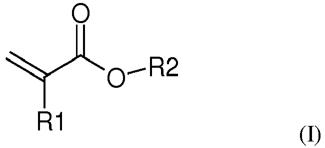 wherein R1 is CH₃ or H; and R2 is (1) a hydrocarbon moiety comprising at least 3 carbon atoms and a hydroxide group, or (2) the hydrocarbon moiety comprising at least 4 carbon atoms, a catenary heteroatom, and a hydroxide group; (ii) 0 to 3 wt % of polar crosslinkable monomer; and (iii) 40 to 99.5 wt % of a C₄ to C₂₀ (meth)acrylate ester monomer; and adding (iv) 5 to 30 % parts of a hydrogenated hydrocarbon tackifier per 100 parts the weight sum of all monomers; and (v) 0.01 to 3 parts (solid/solid) of a cross-linking agent per 100 parts the weight sum of all monomers, to form a curable adhesive composition wherein the polymerization is substantially free of solvent;
(b) curing the curable adhesive composition; and
(c) contacting the cured adhesive composition between a substrate having a surface tension less than 50 mN/m and a carrier film.

11. An article comprising the UV-radiation curable pressure sensitive adhesive of any one of claims 1-9 and a substrate having a surface tension less than 50 mN/m.

12. A composition comprising a composition selected from:
(a) (i) 40 to 99.5 wt % of a C₄ to C₂₀ (meth)acrylate ester monomer; (ii) 0 to 3 wt % of acrylic acid, and (iii) 0.5 to 25 wt % of 2-hydroxy-3-phenoxypropyl acrylate; (iv) 5 - 30 parts of a C9 hydrogenated hydrocarbon per 100 parts the weight sum of all monomers; and (v) 0.01 to 3 parts of 1,6 hexanediol diacrylate per 100 parts the weight sum of all monomers;
(b) (i) 40 to 99.5 wt % of a C₄ to C₂₀ (meth)acrylate ester monomer; (ii) 0 to 3 wt % of acrylic acid, and (iii) 0.5 to 25 wt % of 4-hydroxybutyl acrylate; (iv) 5 - 30 parts of a C9 hydrogenated hydrocarbon per 100 parts the weight sum of all monomers; and (v) 0.01 to 3 parts of 1,6 hexanediol diacrylate per 100 parts the weight sum of all monomers; or
(c) (i) 40 to 99.5 wt % of a C₄ to C₂₀ (meth)acrylate ester monomer; (ii) 0 to 3 wt % of acrylic acid, and (iii) 0.5 to 25 wt % of a compound according to CH₂=CHC(O)O-CH(CH₂OH)[CH₂-O-C(O)-C(CH₃)(R3)(R4)] where R3 and R4 are independently selected from alkyl groups and wherein R3+R4 totals 7 carbon atoms; (iv) 5 - 30 parts of a C9 hydrogenated hydrocarbon per 100 parts the weight sum of all monomers; and (v) 0.01 to 3 parts of 1,6 hexanediol diacrylate per 100 parts the weight sum of all monomers.

13. The pressure sensitive adhesive of any one of claims 1-9 further comprising a plasticizer.

14. The method of claim 10, wherein the curable adhesive is cured via ultraviolet radiation.

15. The article according to claim 11, wherein the substrate is selected from: polypropylene, polyethylene, polystyrene, polyvinyl chloride, polyvinyl acetate, polyester, poly(meth)acrylates, an acrylonitrile butadiene styrene, a polyamide, a polycarbonate, a paint, a clearcoat, or combinations thereof.

## Patentansprüche

1. Durch UV-Strahlung härtbarer druckempfindlicher Klebstoff, umfassend:
(i) ein Polymerisationsreaktionsprodukt von:
(a) 0,5 bis 25 Gew.-% eines hydroxylhaltigen (Meth)acrylat-Monomers der Formel (I): 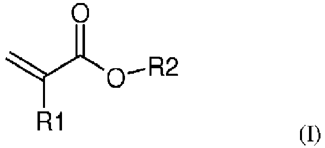 worin R1 CH₃ oder H ist; und R2 (i) eine Kohlenwasserstoffeinheit ist, die mindestens 3 Kohlenstoffatome und eine Hydroxidgruppe umfasst, oder (ii) die Kohlenwasserstoffeinheit, die mindestens 4 Kohlenstoffatome, ein catenäres Heteroatom und eine Hydroxidgruppe umfasst;
(b) 0 bis 3 Gew.-% eines polaren vernetzbaren Monomers;
(c) 40 bis 99,5 Gew.-% eines C₄- bis C₂₀-(Meth)acrylatester-Monomers;
(ii) 5 bis 30 Teile eines hydrierten Kohlenwasserstoff-Klebrigmachers pro 100 Teilen der Gewichtssumme aller Monomere; und
(iii) 0,01 bis 3 Teile (fest/fest) eines Vernetzungsmittels pro 100 Teilen der Gewichtssumme aller Monomere; und
wobei das Polymerisationsreaktionsprodukt im Wesentlichen frei von Lösungsmittel ist.

2. Druckempfindlicher Klebstoff nach Anspruch 1, wobei das C₄- bis C₂₀-(Meth)-acrylatester-Monomer ausgewählt ist aus mindestens einem von: Butylacrylat, Isooctylacrylat, 2-Ethylhexylacrylat und Kombinationen davon.

3. Druckempfindlicher Klebstoff nach einem der vorstehenden Ansprüche, wobei das polare vernetzbare Monomer Acrylsäure ist.

4. Druckempfindlicher Klebstoff nach einem der vorstehenden Ansprüche, wobei das Vernetzungsmittel ausgewählt ist aus: einem Triazin, einem multifunktionellen Acrylat und Kombinationen davon.

5. Druckempfindlicher Klebstoff nach einem der vorstehenden Ansprüche, wobei der hydrierte Kohlenwasserstoff-Klebrigmacher ein C₉ ist.

6. Druckempfindlicher Klebstoff nach einem der vorstehenden Ansprüche, wobei das polymerisierte Reaktionsprodukt ein Molekulargewicht von 500.000 bis 3.000.000 g/mol besitzt.

7. Druckempfindlicher Klebstoff nach einem der vorstehenden Ansprüche, wobei das (Meth)acrylat-Monomer der Formel (I) ausgewählt ist aus mindestens einem von:
CH₂=CZC(O)O-(CH₂)ₙOH, worin n 3 bis 20 ist;
CH₂=CZC(O)O-(CH₂O)ₙH, worin n 2 bis 13 ist;
CH₂=CZC(O)O-[RO]ₙH, worin n 1 bis 13 ist und R linear oder verzweigt mit 1 bis 20 Kohlenstoffatomen ist;
CH₂=CZC(O)O-[CHCH₃CH₂O]ₙH, worin n 1 bis 13 ist;
CH₂=CZC(O)O-(CH₂)₂-O-(CH₂)₂OH;
CH₂=CZC(O)O-CH(OH)-(CH₂)-O-C₆H₅;
CH₂=CZC(O)O-CH₂CH(CH₂CH₃)-CH(CH₂CH₃)-CH(OH)-CH₂CH₃;
CH₂=CZC(O)O-CH(CH₂OH)[CH₂-O-C(O)-C(CH₃)(R3)(R4)], worin R3 und R4 unabhängig ausgewählt sind aus Alkylgruppen und worin R3 + R4 insgesamt 6 bis 10 Kohlenstoffatome beträgt;
CH₂=CZC(O)O-CH₂CH(OH)-[CH₂-O-C(O)-C(CH₃)(R3)(R4)], worin R3 und R4 unabhängig ausgewählt sind aus Alkylgruppen und worin R3 + R4 insgesamt 6 bis 10 Kohlenstoffatome beträgt;
CH₂=CZC(O)O-CH(OH)-CH₂-O- C₆H₄-C(CH₃)₃; und
CH₂=CZC(O)O-CH(OH)-CH₂-O-(CH₂)_{q}(CH₃), worin q 11 bis 13 ist; worin Z H oder CH₃ ist.

8. Druckempfindlicher Klebstoff nach einem der vorstehenden Ansprüche, wobei der druckempfindliche Klebstoff einen Schälwert von mehr als 3,0 N/12,7 mm (Millimeter) (0,5 Zoll) bei Prüfung gemäß dem FINAT-Prüfverfahren Nr. 2 bei Polyethylen (glatte Seite) aufweist; und wobei ferner der gehärtete Klebstoff einen Scherwert von mehr als 5000 Minuten bei Prüfung gemäß dem FINAT-Prüfverfahren Nr. 8 bei 70 °C bei Stahl aufweist.

9. Druckempfindlicher Klebstoff nach einem der vorstehenden Ansprüche, wobei der druckempfindliche Klebstoff einen Schälwert von mehr als 3,0 N/12,7 mm (Millimeter) (0,5 Zoll) bei Prüfung gemäß dem FINAT-Prüfverfahren Nr. 2 bei Polypropylen aufweist; und wobei ferner der gehärtete Klebstoff einen Scherwert von mehr als 5000 Minuten bei Prüfung gemäß dem FINAT-Prüfverfahren Nr. 8 bei 70 °C bei Stahl aufweist.

10. Verfahren zur Herstellung eines Artikels, umfassend:
(a) Polymerisieren von (i) 0,5 bis 25 Gew.-% eines (Meth)acrylat-Monomers der Formel (I): 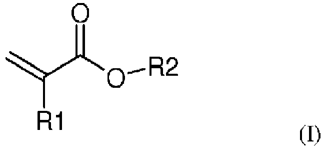 worin R1 CH₃ oder H ist; und R2 (1) eine Kohlenwasserstoffeinheit ist, die mindestens 3 Kohlenstoffatome und eine Hydroxidgruppe umfasst, oder (2) die Kohlenwasserstoffeinheit, die mindestens 4 Kohlenstoffatome, ein catenäres Heteroatom und eine Hydroxidgruppe umfasst; (ii) 0 bis 3 Gew.-% eines polaren vernetzbaren Monomers; und (iii) 40 bis 99,5 Gew.-% eines C₄- bis C₂₀-(Meth)acrylatester-Monomers; und Hinzufügen von (iv) 5 bis 30 Prozentteilen eines hydrierten Kohlenwasserstoff-Klebrigmachers pro 100 Teilen der Gewichtssumme aller Monomere; und (v) 0,01 bis 3 Teilen (fest/fest) eines Vernetzungsmittels pro 100 Teilen der Gewichtssumme aller Monomere, um eine härtbare Klebstoffzusammensetzung zu bilden, wobei die Polymerisation im Wesentlichen frei von Lösungsmittel ist;
(b) Härten der härtbaren Klebstoffzusammensetzung; und
(c) Inkontaktbringen der gehärteten Klebstoffzusammensetzung zwischen einem Substrat mit einer Oberflächenspannung von weniger als 50 mN/m und einer Trägerfolie.

11. Artikel, umfassend den durch UV-Strahlung härtbaren druckempfindlichen Klebstoff nach einem der Ansprüche 1 bis 9 und ein Substrat mit einer Oberflächenspannung von weniger als 50 mN/m.

12. Zusammensetzung, umfassend eine Zusammensetzung, die ausgewählt ist aus:
(a) (i) 40 bis 99,5 Gew.-% eines C₄- bis C₂₀-(Meth)acrylatester-Monomers; (ii) 0 bis 3 Gew.-% Acrylsäure und (iii) 0,5 bis 25 Gew.-% 2-Hydroxy-3-phenoxypropylacrylat; (iv) 5 bis 30 Teilen eines hydrierten C9-Kohlenwasserstoffs pro 100 Teilen der Gewichtssumme aller Monomere; und (v) 0,01 bis 3 Teilen 1,6-Hexandioldiacrylat pro 100 Teilen der Gewichtssumme aller Monomere;
(b) (i) 40 bis 99,5 Gew.-% eines C₄- bis C₂₀-(Meth)acrylatester-Monomers; (ii) 0 bis 3 Gew.-% Acrylsäure und (iii) 0,5 bis 25 Gew.-% 4-Hydroxybutylacrylat; (iv) 5 bis 30 Teilen eines hydrierten C9-Kohlenwasserstoffs pro 100 Teilen der Gewichtssumme aller Monomere; und (v) 0,01 bis 3 Teilen 1,6-Hexandioldiacrylat pro 100 Teilen der Gewichtssumme aller Monomere; oder
(c) (i) 40 bis 99,5 Gew.-% eines C₄- bis C₂₀-(Meth)acrylatester-Monomers; (ii) 0 bis 3 Gew.-% Acrylsäure und (iii) 0,5 bis 25 Gew.-% einer Verbindung gemäß CH₂=CHC(O)O-CH(CH₂OH)[CH₂-O-C(O)-C(CH₃)(R3)(R4)], worin R3 und R4 unabhängig ausgewählt sind aus Alkylgruppen und worin R3 + R4 insgesamt 7 Kohlenstoffatome beträgt; (iv) 5 bis 30 Teilen eines hydrierten C9-Kohlenwasserstoffs pro 100 Teilen der Gewichtssumme aller Monomere; und (v) 0,01 bis 3 Teilen 1,6-Hexandioldiacrylat pro 100 Teilen der Gewichtssumme aller Monomere.

13. Druckempfindlicher Klebstoff nach einem der Ansprüche 1 bis 9, ferner umfassend einen Weichmacher.

14. Verfahren nach Anspruch 10, wobei der härtbare Klebstoff durch Ultraviolettstrahlung gehärtet wird.

15. Artikel nach Anspruch 11, wobei das Substrat ausgewählt ist aus: Polypropylen, Polyethylen, Polystyrol, Polyvinylchlorid, Polyvinylacetat, Polyester, Poly(meth)acrylaten, einem Acrylnitrilbutadienstyrol, einem Polyamid, einem Polycarbonat, einer Farbe, einer Klarlackschicht oder Kombinationen davon.

## Revendications

1. Adhésif sensible à la pression durcissable par rayonnement UV comprenant :
(i) un produit de réaction de polymérisation de :
(a) 0,5 à 25 % en poids d'un monomère (méth)acrylate contenant un hydroxyle de formule (I) : 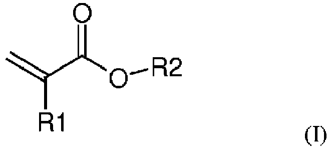 dans laquelle R1 est CH₃ ou H ; et R2 est (i) un fragment hydrocarboné comprenant au moins 3 atomes de carbone et un groupe hydroxyde, ou (ii) le fragment hydrocarboné comprenant au moins 4 atomes de carbone, un hétéroatome caténaire, et un groupe hydroxyde ;
(b) 0 à 3 % en poids de monomère réticulable polaire ;
(c) 40 à 99,5 % en poids d'un monomère ester de (méth)acrylate en C₄ à C₂₀ ;
(ii) 5 à 30 parties d'un agent poisseux hydrocarboné hydrogéné par rapport à la somme des poids de tous les monomères de 100 parties ; et
(iii) 0,01 à 3 parties (solide/solide) d'un agent de réticulation par rapport à la somme des poids de tous les monomères de 100 parties ; et
dans lequel le produit de réaction de polymérisation est essentiellement dépourvu de solvant.

2. Adhésif sensible à la pression selon la revendication 1, dans lequel le monomère ester de (méth)acrylate en C₄ à C₂₀ est choisi parmi au moins l'un parmi : acrylate de butyle, acrylate d'isooctyle, acrylate de 2-éthylhexyle, et leurs combinaisons.

3. Adhésif sensible à la pression selon l'une quelconque des revendications précédentes, dans lequel le monomère réticulable polaire est l'acide acrylique.

4. Adhésif sensible à la pression selon l'une quelconque des revendications précédentes, dans lequel l'agent de réticulation est choisi parmi : une triazine, un acrylate multifonctionnel, et des combinaisons de ceux-ci.

5. Adhésif sensible à la pression selon l'une quelconque des revendications précédentes, dans lequel l'agent poisseux hydrocarboné hydrogéné est un C₉.

6. Adhésif sensible à la pression selon l'une quelconque des revendications précédentes, dans lequel le produit de réaction polymérisé a une masse moléculaire de 500 000 à 3 000 000 g/mol.

7. Adhésif sensible à la pression selon l'une quelconque des revendications précédentes, dans lequel le monomère (méth)acrylate de formule (I) est choisi parmi au moins l'un parmi :
CH₂=CZC(O)O-(CH₂)ₙOH où n va de 3 à 20 ;
CH₂=CZC(O)O-(CH₂O)ₙH où n va de 2 à 13 ;
CH₂=CZC(O)O-[RO]ₙH où n va de 1 à 13 et R linéaire ou ramifié comprenant 1 à 20 atomes de carbone ;
CH₂=CZC(O)O-[CHCH₃CH₂O]ₙH où n va de 1 à 13 ;
CH₂=CZC(O)O-(CH₂)₂-O-(CH₂)₂OH ;
CH₂=CZC(O)O-CH(OH)-(CH₂)-O-C₆H₅ ;
CH₂=CZC(O)O-CH₂CH(CH₂CH₃)-CH(CH₂CH₃)-CH(OH)-CH₂CH₃ ;
CH₂=CZC(O)O-CH(CH₂OH)[CH₂-O-C(O)-C(CH₃)(R3)(R4)] où R3 et R4 sont indépendamment choisis parmi des groupes alkyle et dans lequel R3+R4 totalise 6 à 10 atomes de carbone ;
CH₂=CZC(O)O-CH₂CH(OH)-[CH₂-O-C(O)-C(CH₃)(R3)(R4)] où R3 et R4 sont indépendamment choisis parmi des groupes alkyle et dans lequel R3+R4 totalise 6 à 10 atomes de carbone ;
CH₂=CZC(O)O-CH(OH)-CH₂-O- C₆H₄-C(CH₃)₃ ; et
CH₂=CZC(O)O-CH(OH)-CH₂-O- (CH₂)_{q}(CH₃) où q va de 11 à 13 ; où Z est H ou CH₃.

8. Adhésif sensible à la pression selon l'une quelconque des revendications précédentes, où l'adhésif sensible à la pression a une valeur de pelage supérieure à 3,0 N/12,7 mm (millimètres) (0,5 pouce) lorsque l'on teste selon le procédé de test FINAT No. 2 sur du polyéthylène (côté lisse) ; et dans lequel en outre l'adhésif durci a une valeur de cisaillement supérieure à 5000 minutes lorsque l'on teste selon le procédé de test FINAT No. 8 à 70 °C sur de l'acier.

9. Adhésif sensible à la pression selon l'une quelconque des revendications précédentes, où l'adhésif sensible à la pression a une valeur de pelage supérieure à 3,0 N/12,7 mm (millimètres) (0,5 pouce) lorsque l'on teste selon le procédé de test FINAT No. 2 sur du polypropylène ; et dans lequel en outre l'adhésif durci a une valeur de cisaillement supérieure à 5000 minutes lorsque l'on teste selon le procédé de test FINAT No. 8 à 70 °C sur de l'acier.

10. Procédé de fabrication d'un article comprenant :
(a) la polymérisation de (i) 0,5 à 25 % en poids d'un monomère (méth)acrylate de formule (I) : 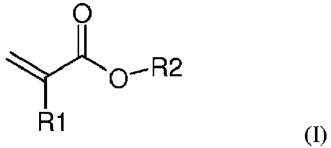 dans laquelle R1 est CH₃ ou H ; et R2 est (1) un fragment hydrocarboné comprenant au moins 3 atomes de carbone et un groupe hydroxyde, ou (2) le fragment hydrocarboné comprenant au moins 4 atomes de carbone, un hétéroatome caténaire, et un groupe hydroxyde ; (ii) 0 à 3 % en poids de monomère réticulable polaire ; et (iii) 40 à 99,5 % en poids d'un monomère ester de (méth)acrylate en C₄ à C₂₀ ; et l'ajout de (iv) 5 à 30 parties en % d'un agent poisseux hydrocarboné hydrogéné par rapport à la somme des poids de tous les monomères de 100 parties ; et (v) 0,01 à 3 parties (solide/solide) d'un agent de réticulation par rapport à la somme des poids de tous les monomères de 100 parties, pour former une composition adhésive durcissable dans lequel la polymérisation est essentiellement dépourvue de solvant ;
(b) le durcissement de la composition adhésive durcissable ; et
(c) la mise en contact de la composition adhésive durcie entre un substrat possédant une tension superficielle inférieure à 50 mN/m et un film de support.

11. Article comprenant l'adhésif sensible à la pression durcissable par rayonnement UV selon l'une quelconque des revendications 1 à 9 et un substrat possédant une tension superficielle inférieure à 50 mN/m.

12. Composition comprenant une composition choisie parmi :
(a) (i) 40 à 99,5 % en poids d'un monomère ester de (méth)acrylate en C₄ à C₂₀ ; (ii) 0 à 3 % en poids d'acide acrylique, et (iii) 0,5 à 25 % en poids d'acrylate de 2-hydroxy-3-phénoxypropyle ; (iv) 5 à 30 parties d'un hydrocarbure hydrogéné en C9 par rapport à la somme des poids de tous les monomères de 100 parties ; et (v) 0,01 à 3 parties de diacrylate de 1,6-hexanediol par rapport à la somme des poids de tous les monomères de 100 parties ;
(b) (i) 40 à 99,5 % en poids d'un monomère ester de (méth)acrylate en C₄ à C₂₀ ; (ii) 0 à 3 % en poids d'acide acrylique, et (iii) 0,5 à 25 % en poids d'acrylate de 4-hydroxybutyle ; (iv) 5 à 30 parties d'un hydrocarbure hydrogéné en C9 par rapport à la somme des poids de tous les monomères de 100 parties ; et (v) 0,01 à 3 parties de diacrylate de 1,6-hexanediol par rapport à la somme des poids de tous les monomères de 100 parties ; ou
(c) (i) 40 à 99,5 % en poids d'un monomère ester de (méth)acrylate en C₄ à C₂₀ ; (ii) 0 à 3 % en poids d'acide acrylique, et (iii) 0,5 à 25 % en poids d'un composé selon CH₂=CHC(O)O-CH(CH₂OH)[CH₂-O-C(O)-C(CH₃)(R3)(R4)] où R3 et R4 sont indépendamment choisis parmi des groupes alkyle et dans lequel R3+R4 totalise 7 atomes de carbone ; (iv) 5 à 30 parties d'un hydrocarbure hydrogéné en C9 par rapport à la somme des poids de tous les monomères de 100 parties ; et (v) 0,01 à 3 parties de diacrylate de 1,6-hexanediol par rapport à la somme des poids de tous les monomères de 100 parties.

13. Adhésif sensible à la pression selon l'une quelconque des revendications 1 à 9, comprenant en outre un plastifiant.

14. Procédé selon la revendication 10, dans lequel l'adhésif durcissable est durci par l'intermédiaire d'un rayonnement ultraviolet.

15. Article selon la revendication 11, dans lequel le substrat est choisi parmi :
polypropylène, polyéthylène, polystyrène, chlorure de polyvinyle, acétate de polyvinyle, polyester, poly(méth)acrylates, un acrylonitrile-butadiène-styrène, un polyamide, un polycarbonate, une peinture, un enduit lustré, ou des combinaisons de ceux-ci.
